# EUROPEAN PATENT APPLICATION

(11) **EP 4 351 117 A1**
(43) Date of publication of application: **10.04.2024**
(21) Application number: 22815178.3
(22) Date of filing: 27.05.2022
(51) Int. Cl.: H04M 1/72439

(54) **INFORMATION DISPLAY METHOD AND APPARATUS, AND ELECTRONIC DEVICE**

(30) Priority: 02.06.2021 CN 202110613478
(71) Applicant: Vivo Mobile Communication Co., Ltd., Dongguan, Guangdong 523863 (CN)
(72) Inventor: YU, Zhichao, Hangzhou, Zhejiang 311121 (CN)
(74) Representative: Lavoix
(86) International application number: PCT/CN2022/095576
(87) International publication number: WO 2022/253132

(57) **Abstract**

This application discloses an information display method and apparatus, and an electronic device, pertains to the field of communications technologies. The method includes: receiving a first input for a target interface, where the target interface displays first instant messaging information; obtaining, in response to the first input, additional description information corresponding to the first instant messaging information; and displaying the additional description information and the first instant messaging information in combination in the target interface.

## Description

### CROSS-REFERENCE TO RELATED APPLICATIONS

This application claims priority to Chinese Patent Application No. 202110613478.1, filed on June 2, 2021 in China, which is incorporated herein by reference in its entirety.

### TECHNICAL FIELD

This application pertains to the field of communications technologies, and in particular, to an information display method and apparatus, and an electronic device.

### BACKGROUND

With the rapid development of smartphones, people are increasingly dependent on mobile phones in their lives. In daily work and social chat, we often send some pictures, and sometimes we add some description information after sending the pictures. However, the existing solution for adding description information has the disadvantage of message redundancy.

### SUMMARY

Embodiments of this application aim to provide an information display method and apparatus, and an electronic device, to solve the problem that the existing solution for adding description information has the disadvantage of message redundancy.

According to a first aspect, an embodiment of this application provides an information display method, including:
receiving a first input for a target interface, where the target interface displays first instant messaging information;
obtaining, in response to the first input, additional description information corresponding to the first instant messaging information; and
displaying the additional description information and the first instant messaging information in combination in the target interface.

According to a second aspect, an embodiment of this application provides an information display apparatus, including:
a first receiving module, configured to receive a first input for a target interface, where the target interface displays first instant messaging information;
a first response module, configured to obtain, in response to the first input, additional description information corresponding to the first instant messaging information; and
a first display module, configured to display the additional description information and the first instant messaging information in combination in the target interface.

According to a third aspect, an embodiment of this application provides an electronic device. The electronic device includes a processor, a memory, and a program or an instruction stored in the memory and executable on the processor, where the program or the instruction is executed by the processor to implement steps of the method according to the first aspect.

According to a fourth aspect, an embodiment of this application provides a readable storage medium. The readable storage medium stores a program or an instruction, and when the program or the instruction is executed by a processor, steps of the method according to the first aspect are implemented.

According to a fifth aspect, an embodiment of this application provides a chip. The chip includes a processor and a communications interface, the communications interface is coupled to the processor, and the processor is configured to run a program or an instruction to implement the method according to the first aspect.

According to a sixth aspect, a computer program/program product is provided, where the computer program/program product is stored in a non-volatile storage medium, and the program/program product is executed by at least one processor to implement steps of the method according to the first aspect.

According to a seventh aspect, an electronic device is provided, configured to perform steps of the method according to the first aspect.

In the embodiments of this application, the additional description information and the first instant messaging information are displayed in combination, that is, the additional description information and the sent first instant messaging information are merged into one piece of information for display, that is, the additional description information is merged to a display position corresponding to the originally sent first instant messaging information without resending the first instant messaging information, thus avoiding message redundancy.

### BRIEF DESCRIPTION OF DRAWINGS

FIG. 1 is a schematic flowchart of an information display method according to an embodiment of this application;
FIG. 2 is a first schematic diagram of displaying a target interface according to an embodiment of this application;
FIG. 3 is a second schematic diagram of displaying a target interface according to an embodiment of this application;
FIG. 4 is a third schematic diagram of displaying a target interface according to an embodiment of this application;
FIG. 5 is a fourth schematic diagram of displaying a target interface according to an embodiment of this application;
FIG. 6 is a fifth schematic diagram of displaying a target interface according to an embodiment of this application;
FIG. 7 is a sixth schematic diagram of displaying a target interface according to an embodiment of this application;
FIG. 8 is a seventh schematic diagram of displaying a target interface according to an embodiment of this application;
FIG. 9 is an eighth schematic diagram of displaying a target interface according to an embodiment of this application;
FIG. 10 is a schematic diagram of modules of an information display apparatus according to an embodiment of this application;
FIG. 11 is a first structural block diagram of an electronic device according to an embodiment of the present invention; and
FIG. 12 is a second structural block diagram of an electronic device according to an embodiment of the present invention.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" generally represents an "or" relationship between associated objects.

With reference to the accompanying drawings, the following describes in detail the information display method in the embodiments of this application based on specific embodiments and application scenarios.

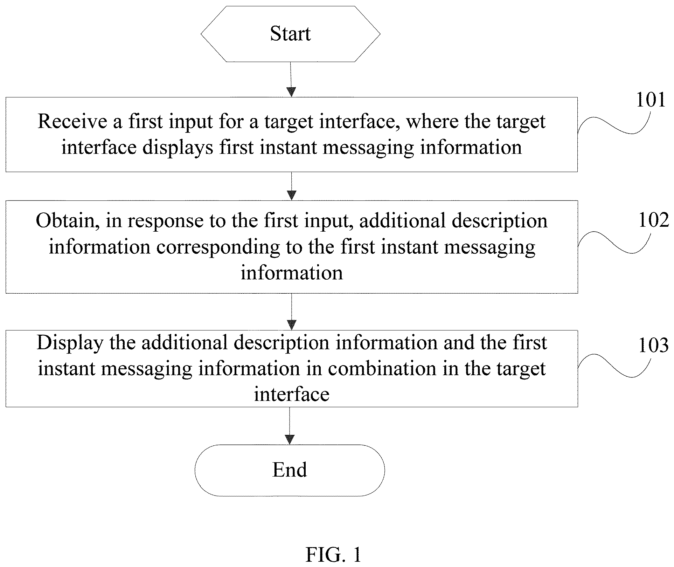

An embodiment of this application provides an information display method, which is applied to an electronic device. As shown in FIG. 1, the method includes the following steps.

Step 101: Receive a first input for a target interface, where the target interface displays first instant messaging information.

In this step, the target interface may be an instant messaging interface, at least one piece of instant messaging information is displayed in the instant messaging interface, and the first instant messaging information is one of the at least one piece of instant messaging information.

The type of the first instant messaging information includes, but is not limited to, words, pictures, and emotion icons. Preferably, the first instant messaging information is a picture.

Step 102: Obtain, in response to the first input, additional description information corresponding to the first instant messaging information.

The additional description information may be a web page address (such as the address of the news web page visited, the sharing link of the shopping store, or the like), a picture, an emotion icon, or the like.

Step 103: Display the additional description information and the first instant messaging information in combination in the target interface.

Herein, the additional description information and the first instant messaging information are displayed in combination, that is, the additional description information and the sent first instant messaging information are merged into one piece of information for display, that is, the additional description information is merged to a display position corresponding to the originally sent first instant messaging information without resending the first instant messaging information, thus avoiding message redundancy.

As a first optional implementation, the first application identifier is displayed in the target interface, and the first input is an input for the first application identifier, for example, the first input is a click input for the first application identifier, or the like. In this case, the first instant messaging information may be instant messaging information closest to a current time. For another example, the first input may be an input to drag the first application identifier to the display area corresponding to the first instant messaging information.

The obtaining, in response to the first input, additional description information corresponding to the first instant messaging information includes:
obtaining, in response to the first input, additional description information related to an application program corresponding to the first application identifier.

In this implementation, in response to the first input, additional description information related to an application program corresponding to the first application identifier is automatically generated. Because different types of application programs are corresponding to different additional description information, the purpose of quickly adding various forms of description information can be achieved.

It should be noted that in this embodiment of this application, the display area corresponding to the first instant messaging information may include at least one of a display area occupied by the first instant messaging information and a display area located around the display area occupied by the first instant messaging information.

Optionally, in a case that the category of the application program corresponding to the first application identifier is a shopping application, the additional description information includes relevant information of the currently browsed goods, for example, the description information of the currently browsed goods and the store link of the currently browsed goods; or
in a case that the category of the application program corresponding to the first application identifier is a music application, the additional description information includes relevant information of the currently played song, such as a name of the currently played song, lyrics of the currently played song, or the like; or
in a case that the category of the application program corresponding to the first application identifier is a news application, the additional description information includes relevant information of the currently browsed news.

In this embodiment of this application, various forms of description information can be quickly added through different application identifiers.

In the first optional implementation, a floating identifier is displayed in the target interface; and
before the obtaining, in response to the first input, additional description information corresponding to the first instant messaging information, further including:
receiving a second input for the floating identifier; and
displaying, in response to the second input, an application identifier corresponding to at least one application program, where the application program is an application program running in the background, and the first application identifier is an application identifier in at least one application identifier.

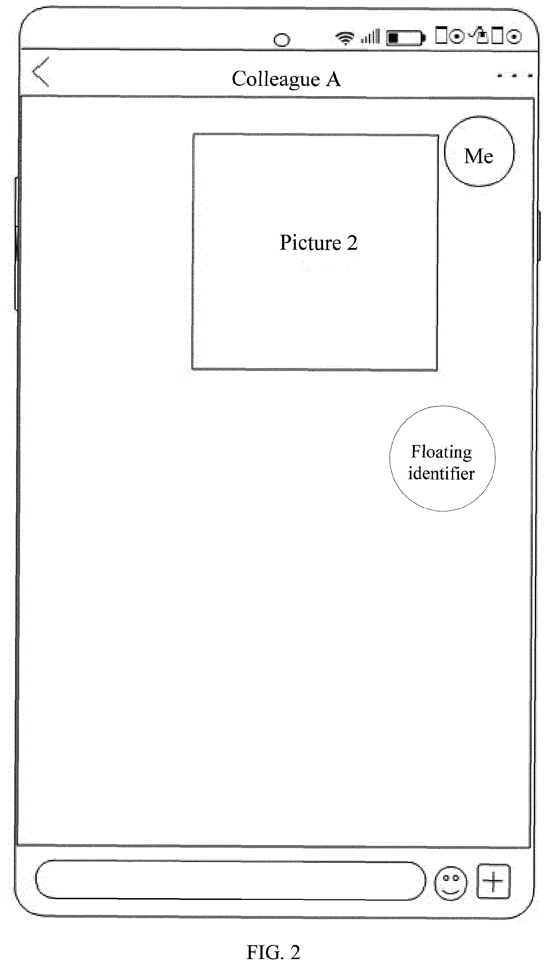

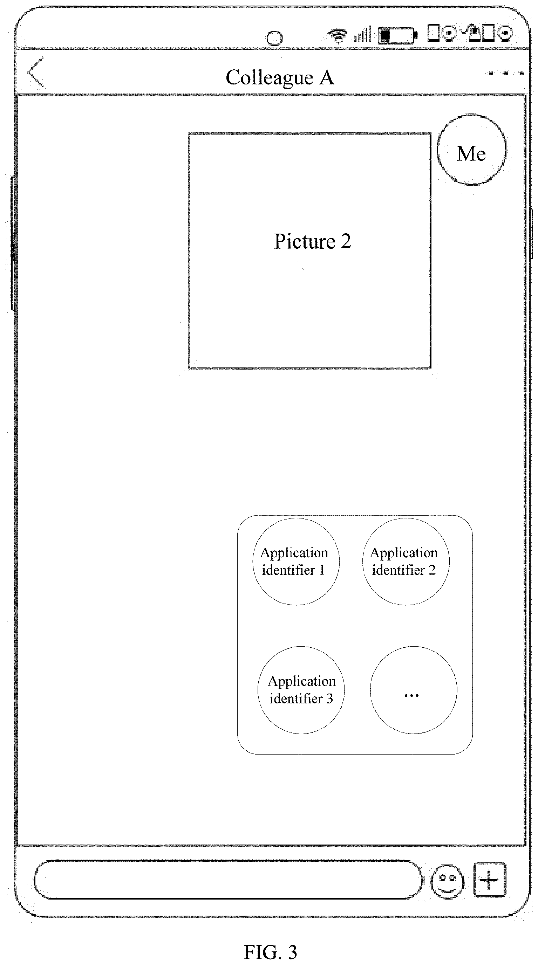

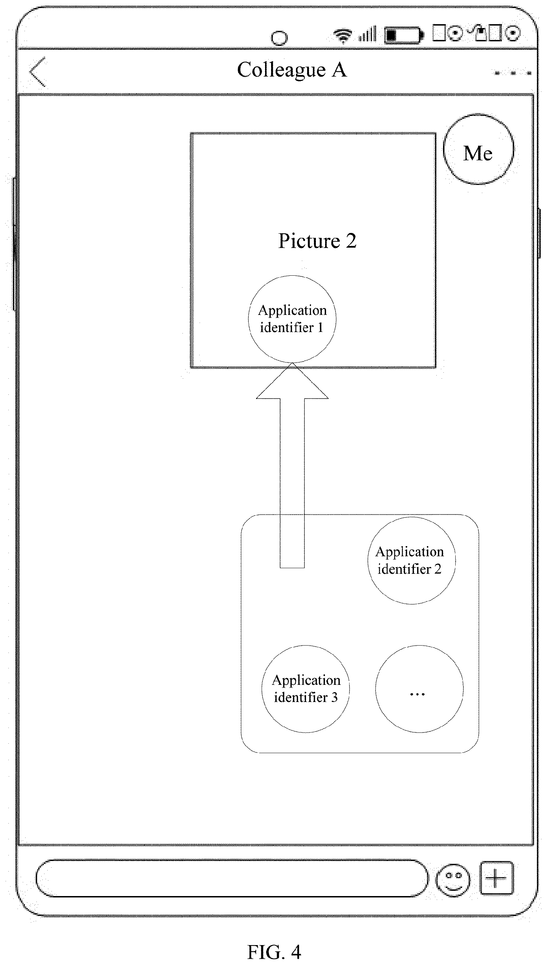

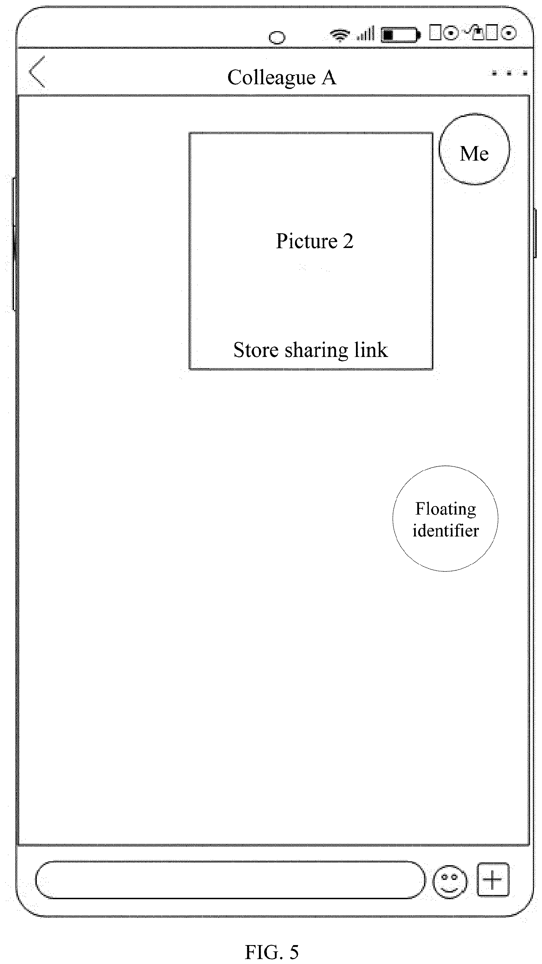

For example, the second input is a click input for the floating identifier. As shown in FIG. 2 and FIG. 3, the first instant messaging information is a picture 2, and after a user clicks the floating identifier, a plurality of application identifiers are displayed. As shown in FIG. 4 and FIG. 5, when a user drags an application identifier 1 to a display area corresponding to the picture 2, additional description information corresponding to the application identifier 1, such as a store sharing link, is automatically generated and displayed with the picture 2 in combination, so that message redundancy can be effectively avoided.

Preferably, the displaying the additional description information and the first instant messaging information in combination in the target interface includes:
displaying the additional description information and the first instant messaging information in combination in a case that the additional description information is generated within a preset time period after sending the first instant messaging information.

For example, the preset time period is set to two minutes, and if the additional description information is generated within two minutes after the first instant messaging information is sent, the additional description information and the first instant messaging information are displayed in combination.

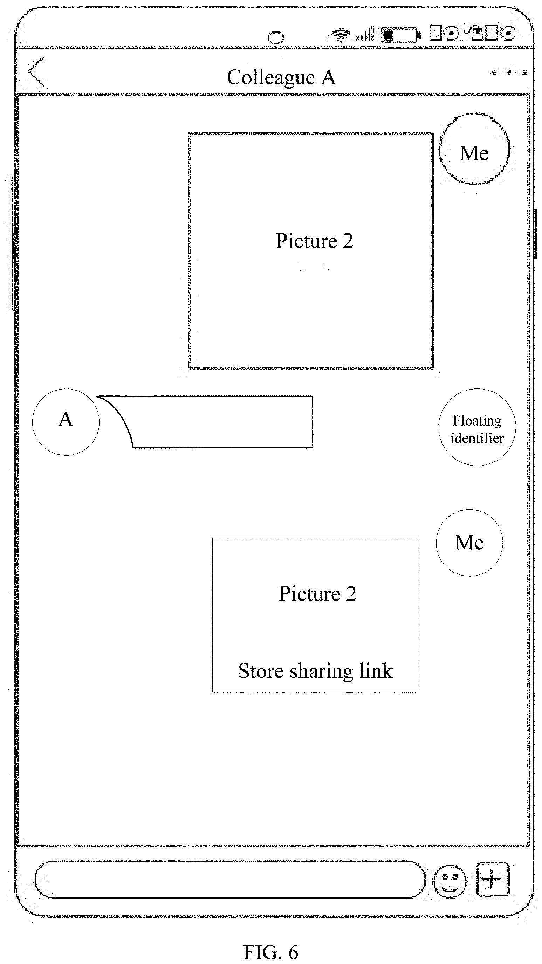

In addition, in a case that the additional description information is generated outside the preset time period after sending the first instant messaging information, the additional description information is not displayed in combination with the first instant messaging information, as shown in FIG. 6. In this case, first instant messaging information with the additional description information is regenerated and regenerated first instant messaging information is displayed.

In addition, it should be noted that in this embodiment of this application, the first instant messaging information may be information sent by a message sender or information sent by a message receiver.

In the first optional implementation, various forms of description information can be quickly added to sent communications information through the floating identifier.

As a second optional implementation, the first input is an input for the first instant messaging information; and
the obtaining, in response to the first input, additional description information corresponding to the first instant messaging information includes:
displaying, in response to the first input, an information editing box in a display area corresponding to the first instant messaging information, and obtaining additional description information that is input through the information editing box.

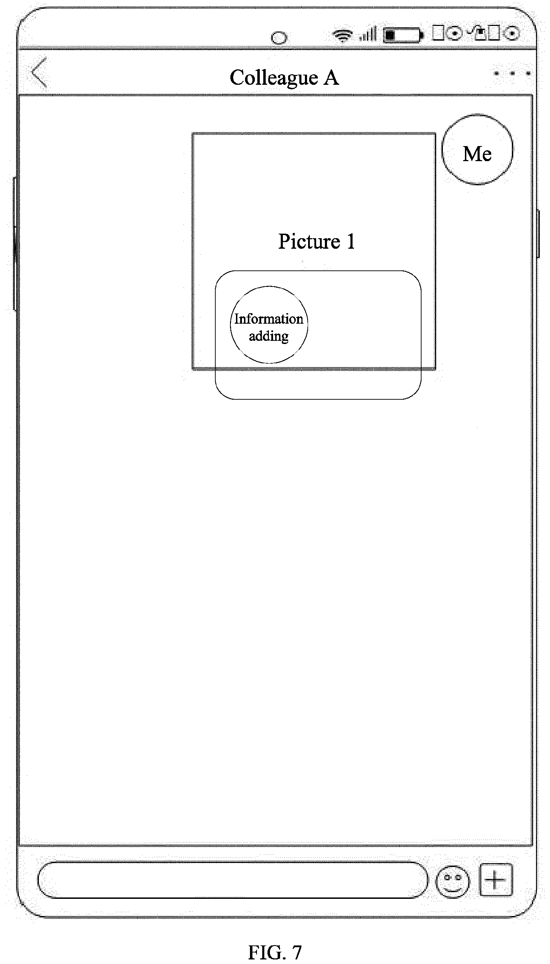

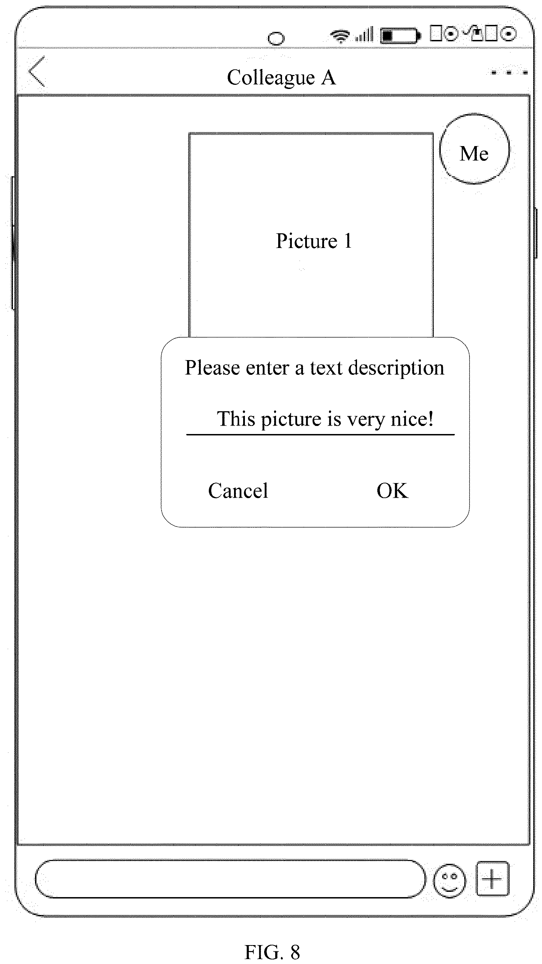

It is assumed that the first instant messaging information is a picture 1, and the first input is touch and hold. As shown in FIG. 7 and FIG. 8, if a user presses the first instant messaging information for a long time, an information editing box is displayed, through which a user may input corresponding additional description information. Specifically, an information adding identifier is displayed in the information editing box, and a user may input information in the information editing box after clicking the information adding identifier. In this way, the corresponding description information can be added conveniently and quickly.

Optionally, within the preset time period after the first instant messaging information is sent, the corresponding additional description information can be added in the above manner.

Optionally, in the second optional implementation, further including:
in a process of obtaining the additional description information, sending prompt information to an information receiver, where the prompt information includes content of description information that the other party adds to the instant messaging information.

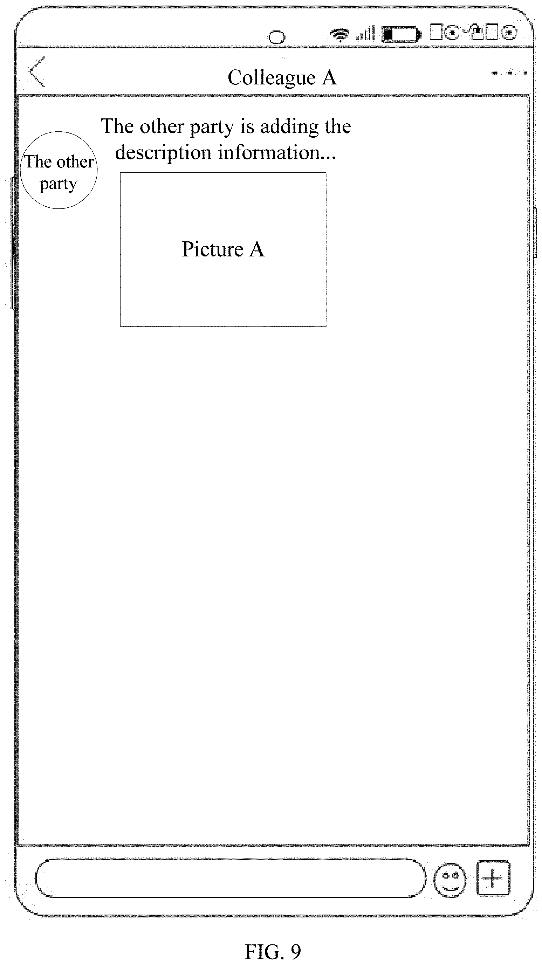

In this embodiment of this application, during the process of inputting the additional description information by a user, that is, during the process of adding the additional description information by the sender of the first instant messaging information, the receiver can see that description information is being added to the received picture. As shown in FIG. 9, a prompt "The other party is adding the description information" is displayed in the target area (such as an upper area) of the received first instant messaging information.

Optionally, the displaying the additional description information and the first instant messaging information in combination in the target interface includes:
displaying the additional description information and the first instant messaging information in combination in a case that the additional description information is generated within a preset time period after sending the first instant messaging information.

For example, the preset time period is set to two minutes, and if the additional description information is generated within two minutes after sending the first instant messaging information, the additional description information and the first instant messaging information are displayed in combination, that is, the additional description information is displayed in the display area corresponding to the sent first instant messaging information without resending the first instant messaging information, thus effectively avoiding message redundancy.

In this implementation, for the sent instant messaging information, description information can be added again within the preset time period, and in a process of adding text description, the information receiver can be prompted.

According to the method in this embodiment of this application, the additional description information and the first instant messaging information are displayed in combination, that is, the additional description information and the sent first instant messaging information are merged into one piece of information for display, that is, the additional description information is merged to a display position corresponding to the originally sent first instant messaging information without resending the first instant messaging information, thus avoiding message redundancy.

It should be noted that, the information display method provided in this embodiment of this application may be performed by an information display apparatus, or a control module that is in the information display apparatus and that is configured to perform the information display method. In this embodiment of this application, an example in which the information display apparatus performs the information display method is used to describe the information display apparatus provided in this embodiment of this application.

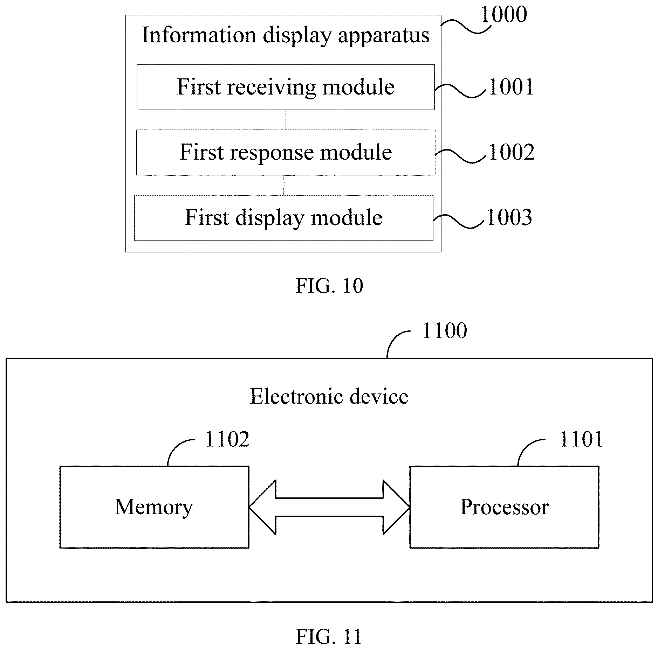

As shown in FIG. 10, an embodiment of this application further provides an information display apparatus 1000, applied to an electronic device, and including:
a first receiving module 1001, configured to receive a first input for a target interface, where the target interface displays first instant messaging information;
a first response module 1002, configured to obtain, in response to the first input, additional description information corresponding to the first instant messaging information; and
a first display module 1003, configured to display the additional description information and the first instant messaging information in combination in the target interface.

Optionally, a first application identifier is displayed in the target interface, and the first input is an input for the first application identifier; and
the first response module is configured to obtain, in response to the first input, additional description information related to an application program corresponding to the first application identifier.

Optionally, a floating identifier is displayed in the target interface; and the apparatus further includes:
a second receiving module, configured to receive a second input for the floating identifier; and
a second response module, configured to display, in response to the second input, an application identifier corresponding to at least one application program, where the application program is an application program running in the background, and the first application identifier is an application identifier in at least one application identifier.

Optionally, in a case that the category of the application program corresponding to the first application identifier is a shopping application, the additional description information includes relevant information of the currently browsed goods; or
in a case that the category of the application program corresponding to the first application identifier is a music application, the additional description information includes relevant information of the currently played song; or
in a case that the category of the application program corresponding to the first application identifier is a news application, the additional description information includes relevant information of the currently browsed news.

Optionally, the first response module is configured to: display, in response to the first input, an information editing box in a display area corresponding to the first instant messaging information, and obtain additional description information that is input through the information editing box.

Optionally, the apparatus further includes:
a first transmitting module, configured to: in a process of obtaining the additional description information, send prompt information to an information receiver, where the prompt information includes content of description information that the other party adds to the instant messaging information.

Optionally, the first display module is configured to: display the additional description information and the first instant messaging information in combination in a case that the additional description information is generated within a preset time period after sending the first instant messaging information.

According to the information display apparatus in this embodiment of this application, the additional description information and the first instant messaging information are displayed in combination, that is, the additional description information and the sent first instant messaging information are merged into one piece of information for display, that is, the additional description information is merged to a display position corresponding to the originally sent first instant messaging information without resending the first instant messaging information, thus avoiding message redundancy.

The information display apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, NAS), a personal computer (personal computer, PC), a television (television, TV), a teller machine, a self-service machine, or the like. This is not specifically limited in the embodiments of this application.

The information display apparatus in this embodiment of this application may be an apparatus with an operating system. The operating system may be an Android (Android) operating system, an iOS operating system, or another possible operating system, which is not specifically limited in this embodiment of this application.

The information display apparatus provided in this embodiment of this application can implement processes implemented in the method embodiments from FIG. 1 to FIG. 9. To avoid repetition, details are not described herein again.

Optionally, as shown in FIG. 11, an embodiment of this application further provides an electronic device 1100, including a processor 1101, a memory 1102, and a program or an instruction stored in the memory 1102 and executable on the processor 1101. When the program or the instruction is executed by the processor 1101, the processes of the foregoing information display method embodiment are implemented, and a same technical effect can be achieved. To avoid repetition, details are not described herein again.

It should be noted that the electronic device in this embodiment of this application includes the foregoing mobile electronic device and the foregoing non-mobile electronic device.

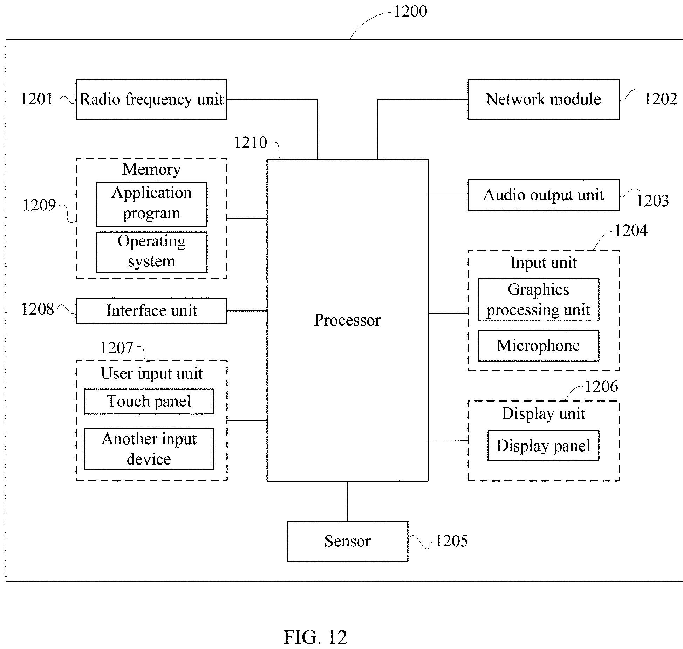

FIG. 12 is a schematic diagram of a hardware structure of an electronic device according to an embodiment of this application.

An electronic device 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art can understand that the electronic device 1200 may further include a power supply (such as a battery) that supplies power to each component. The power supply may be logically connected to the processor 1210 by using a power supply management system, to implement functions such as charging and discharging management, and power consumption management by using the power supply management system. The structure of the electronic device shown in FIG. 12 does not constitute a limitation on the electronic device. The electronic device may include components more or fewer than those shown in the diagram, a combination of some components, or different component arrangements. Details are not described herein.

A user input unit 1207 is configured to receive a first input for a target interface, where the target interface displays first instant messaging information; the processor 1210 is configured to obtain, in response to the first input, additional description information corresponding to the first instant messaging information; and the display unit 1206 is configured to display the additional description information and the first instant messaging information in combination in the target interface.

According to the electronic device in this embodiment of this application, the additional description information and the first instant messaging information are displayed in combination, that is, the additional description information and the sent first instant messaging information are merged into one piece of information for display, that is, the additional description information is merged to a display position corresponding to the originally sent first instant messaging information without resending the first instant messaging information, thus avoiding message redundancy.

Optionally, a first application identifier is displayed in the target interface, and the first input is an input for the first application identifier; and the processor 1210 is configured to obtain, in response to the first input, additional description information related to an application program corresponding to the first application identifier.

Optionally, a floating identifier is displayed in the target interface; a user input unit 1207 is configured to: before obtaining, in response to the first input, additional description information corresponding to the first instant messaging information, receive a second input for the floating identifier; and the processor 1210 is configured to: display, in response to the second input, an application identifier corresponding to at least one application program, where the application program is an application program running in the background, and the first application identifier is an application identifier in at least one application identifier.

Optionally, in a case that the category of the application program corresponding to the first application identifier is a shopping application, the additional description information includes relevant information of the currently browsed goods; or
in a case that the category of the application program corresponding to the first application identifier is a music application, the additional description information includes relevant information of the currently played song; or
in a case that the category of the application program corresponding to the first application identifier is a news application, the additional description information includes relevant information of the currently browsed news.

Optionally, the first input is an input for the first instant messaging information; and
the processor 1210 is configured to: display, in response to the first input, an information editing box in a display area corresponding to the first instant messaging information, and obtain additional description information that is input through the information editing box.

Optionally, the processor 1210 is further configured to: in a process of obtaining the additional description information, send prompt information to an information receiver by using the radio frequency unit 1201, where the prompt information includes content of description information that the other party adds to the instant messaging information.

Optionally, the display unit 1206 is configured to: display the additional description information and the first instant messaging information in combination in a case that the additional description information is generated within a preset time period after sending the first instant messaging information.

According to the electronic device in this embodiment of this application, the additional description information and the first instant messaging information are displayed in combination, that is, the additional description information and the sent first instant messaging information are merged into one piece of information for display, that is, the additional description information is merged to a display position corresponding to the originally sent first instant messaging information without resending the first instant messaging information, thus avoiding message redundancy.

It should be understood that, in this embodiment of this application, the input unit 1204 may include a graphics processing unit (Graphics Processing Unit, GPU) 12041 and a microphone 12042, and the graphics processing unit 12041 processes image data of a still picture or a video obtained by an image capture apparatus (such as a camera) in a video capture mode or an image capture mode. The display unit 1206 may include a display panel 12061. Optionally, the display panel 12061 may be configured in a form such as a liquid crystal display or an organic light-emitting diode. A user input unit 1207 includes a touch panel 12071 and another input device 12072. The touch panel 12071 is also referred to as a touchscreen. The touch panel 12071 may include two parts: a touch detection apparatus and a touch controller. The another input device 12072 may include but is not limited to a physical keyboard, a functional button (such as a volume control button or a power on/off button), a trackball, a mouse, and a joystick. Details are not described herein. The memory 1209 may be configured to store a software program and various data, including but not limited to an application program and an operating system. An application processor and a modem processor may be integrated into the processor 1210, the application processor mainly processes an operating system, a user interface, an application program, and the like, and the modem processor mainly processes wireless communication. It can be understood that, alternatively, the modem processor may not be integrated into the processor 1210.

An embodiment of this application further provides a readable storage medium. The readable storage medium stores a program or an instruction, and when the program or the instruction is executed by a processor, the various processes of the foregoing information display method embodiment is performed and the same technical effects can be achieved. To avoid repetition, details are not described herein again.

The processor is a processor in the electronic device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, the chip includes a processor and a communications interface, the communications interface is coupled to the processor, and the processor is configured to run programs or instructions to implement each process of the embodiment of the foregoing information display method and the same technical effects can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product. The computer program product is stored in a non-volatile storage medium, and the computer program product is executed by at least one processor to implement the processes of the foregoing information display method embodiment, and a same technical effect can be achieved. To avoid repetition, details are not described herein again.

An embodiment of this application further provides an electronic device, configured to perform the processes of the foregoing information display method embodiment, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An information display method, comprising:
receiving a first input for a target interface, wherein the target interface displays first instant messaging information;
obtaining, in response to the first input, additional description information corresponding to the first instant messaging information; and
displaying the additional description information and the first instant messaging information in combination in the target interface.

2. The method according to claim 1, wherein a first application identifier is displayed in the target interface, and the first input is an input for the first application identifier; and
the obtaining, in response to the first input, additional description information corresponding to the first instant messaging information comprises:
obtaining, in response to the first input, additional description information related to an application program corresponding to the first application identifier.

3. The method according to claim 2, wherein a floating identifier is displayed in the target interface; and
before the obtaining, in response to the first input, additional description information corresponding to the first instant messaging information, further comprising:
receiving a second input for the floating identifier; and
displaying, in response to the second input, an application identifier corresponding to at least one application program, wherein the application program is an application program running in the background, and the first application identifier is an application identifier in at least one application identifier.

4. The method according to claim 1, wherein the first input is an input for the first instant messaging information; and
the obtaining, in response to the first input, additional description information corresponding to the first instant messaging information comprises:
displaying, in response to the first input, an information editing box in a display area corresponding to the first instant messaging information, and obtaining additional description information that is input through the information editing box.

5. The method according to claim 4, further comprising:
in a process of obtaining the additional description information, sending prompt information to an information receiver, wherein the prompt information comprises content of description information that the other party adds to the instant messaging information.

6. The method according to claim 1, wherein the displaying the additional description information and the first instant messaging information in combination in the target interface comprises:
displaying the additional description information and the first instant messaging information in combination in a case that the additional description information is generated within a preset time period after sending the first instant messaging information.

7. An information display apparatus, comprising:
a first receiving module, configured to receive a first input for a target interface, wherein the target interface displays first instant messaging information;
a first response module, configured to obtain, in response to the first input, additional description information corresponding to the first instant messaging information; and
a first display module, configured to display the additional description information and the first instant messaging information in combination in the target interface.

8. The apparatus according to claim 7, wherein a first application identifier is displayed in the target interface, and the first input is an input for the first application identifier; and
the first response module is configured to obtain, in response to the first input, additional description information related to an application program corresponding to the first application identifier.

9. The apparatus according to claim 8, wherein a floating identifier is displayed in the target interface; and
the apparatus further comprises:
a second receiving module, configured to receive a second input for the floating identifier; and
a second response module, configured to display, in response to the second input, an application identifier corresponding to at least one application program, wherein the application program is an application program running in the background, and the first application identifier is an application identifier in at least one application identifier.

10. The apparatus according to claim 7, wherein the first response module is configured to: display, in response to the first input, an information editing box in a display area corresponding to the first instant messaging information, and obtain additional description information that is input through the information editing box.

11. The apparatus according to claim 10, further comprising:
a first transmitting module, configured to: in a process of obtaining the additional description information, send prompt information to an information receiver, wherein the prompt information comprises content of description information that the other party adds to the instant messaging information.

12. The apparatus according to claim 7, wherein the first display module is configured to display the additional description information and the first instant messaging information in combination in a case that the additional description information is generated within a preset time period after sending the first instant messaging information.

13. An electronic device, comprising a processor, a memory, and a program or an instruction stored in the memory and executable on the processor, wherein when the program or the instruction is executed by the processor, steps of the information display method according to any one of claims 1 to 6 are implemented.

14. A readable storage medium, wherein the readable storage medium stores a program or an instruction, and when the program or the instruction is executed by a processor, steps of the information display method according to any one of claims 1 to 6 are implemented.

15. A chip, comprising a processor and a communications interface, wherein the communications interface is coupled to the processor, and the processor is configured to run a program or an instruction to implement steps of the information display method according to any one of claims 1 to 6.

16. A computer program product, wherein the computer program product is stored in a non-volatile storage medium, and when the computer program product is executed by at least one processor, steps of the information display method according to any one of claims 1 to 6 are implemented.

17. An electronic device, configured to implement steps of the information display method according to any one of claims 1 to 6.
